# EUROPÄISCHE PATENTSCHRIFT

(11) **EP 1 339 485 B1**
(45) Veröffentlichungstag und Bekanntmachung des Hinweises auf die Patenterteilung: **03.11.2010**
(21) Anmeldenummer: 01974018.2
(22) Anmeldetag: 30.08.2001
(51) Int. Cl.: B01J 19/00

(54) **MIKROSTRUKTURREAKTOR UND VERFAHREN ZUR DURCHFÜHRUNG CHEMISCHER REAKTIONEN**
MICROSTRUCTURE REACTOR AND METHOD FOR CARRYING OUT CHEMICAL REACTIONS
REACTEUR A MICROSTRUCTURE ET PROCEDE POUR LA REALISATION DE REACTIONS CHIMIQUES

(30) Priorität: 04.09.2000 DE 10044526
(43) Veröffentlichungstag der Anmeldung: 03.09.2003
(73) Patentinhaber: Karlsruher Institut für Technologie, 76131 Karlsruhe (DE)
(72) Erfinder: SCHUBERT, Klaus, 76227 Karlsruhe (DE); WUNSCH, Rolf, 76135 Karlsruhe (DE); FICHTNER, Maximilian, 68723 OFTERSHEIM (DE); KAH, Michael, 85521 RIEMERLING (DE)
(74) Vertreter: Müller, Thomas
(86) Internationale Anmeldenummer: PCT/DE2001/003411
(87) Internationale Veröffentlichungsnummer: WO 2002/020149

(56) Entgegenhaltungen:
- WO-A-96/12541
- WO-A-99/16542
- DE-A- 3 926 466
- GB-A- 2 328 275

## Beschreibung

Die Erfindung betrifft einen Mikrostrukturreaktor zur Durchführung mindestens einer chemischen Reaktion zwischen jeweils zwei Reaktionspartnern sowie ein Verfahren zur Durchführung chemischer Reaktionen in einem Mikrostrukturreaktor.

Die Art der Reaktionsführung, d.h. insbesondere die Beeinflussung der örtlichen Temperatur- und Konzentrationsverteilungen in einem Reaktor sind maßgeblich für das mit der jeweiligen chemischen Reaktion erzielbare Produktspektrum. Um eine möglichst optimale Verfahrensführung zu ermöglichen, sollten daher bei der chemischen Umsetzung von Edukten in einem Reaktor diese Parameter sowohl zeitlich wie auch örtlich möglichst präzise beeinflussbar sein.

Für klassische Reaktorkonzepte, die üblicherweise in der Industrie angewendet werden, sind aus physikalischer Sicht (große Volumina, Vermischungseffekte, Transportphänomene) verfahrenstechnische Grenzen gesetzt.

Demgegenüber bringen Mikrostrukturreaktoren zum Erreichen einer möglichst definierten Reaktionsführung eine Reihe von Vorteilen mit sich. Das wesentliche Merkmal dieser Mikrostrukturreaktoren ist darin zu sehen, dass die typischen Querabmessungen der Strömungskanäle (z.B. Durchmesser, Diagonale oder kleinste Querabmessung), durch die die den Mikrostrukturreaktor strömenden Fluide geführt werden, in einer typischen Größenordnung von etwa 20 bis 2000 µm liegen. Man spricht daher auch von Mikrokanälen. Die Wanddicken dieser Mikrokanäle liegen ebenfalls typischerweise in einer solchen Größenordnung. Dadurch ergeben sich für den Wärmeübergang zwischen den einzelnen Fluiden, die üblicherweise durch die einzelnen Mikrokanäle des schichtweise aufgebauten Mikrostrukturreaktors geführt werden, hervorragende Eigenschaften, d.h. bezogen auf das Bauvolumen extrem hohe Wärmeübertragungsleistungen. Neben diesen Wärmeübertragungseigenschaften wird auch der Stoffübergang zur Reaktorwand durch die Geometrie der Mikrostrukturkanäle positiv beeinflusst. Dies liegt an den entsprechend den Durchmessern der Strömungskanäle äußerst kurzen Diffusionswegen, die für den Ausgleich eines Konzentrationsgefälles maßgeblich sind. Dies ist insbesondere dann von Bedeutung, wenn im Mikrostrukturreaktor schnelle, heterogen katalysierte Reaktionen ablaufen sollen, also ein ortsfest angeordneter Katalysator in den Strömungskanälen benutzt wird.

Ein Nachteil der üblichen, bisher in der Literatur beschriebenen Mikrostrukturreaktoren ist darin zu sehen, dass beim Mischvorgang der Edukte, die miteinander reagieren sollen, bereits eine Reaktion eintreten kann, wenn diese Mischung außerhalb des Reaktors erfolgt, oder dass die Reaktion, die über einen festgelegten Reaktionsablauf im Reaktor durchgeführt werden soll, unkontrolliert erfolgt. Weiterhin ist die Temperatur im Reaktor für stark endo- bzw. exotherme Reaktionen aufgrund der unkontrollierten Reaktion nicht definiert regelbar. Dies kann beispielsweise zu geringeren Umsätzen bei der Reaktion der Edukte und auch zu unerwünscht ausgeprägten Selektivitäten für die in der Reaktion erzielbaren Produkte führen. Bei stark exothermen Reaktionen kann es zu sogenannten "hot spots" kommen, die eine Beschädigung des Mikrostrukturreaktors nach sich ziehen können.

Aufgrund der bisher äußerst schlechten Beeinflussbarkeit der Temperaturführung in einem Mikrostrukturreaktor ist es bisher praktisch nicht möglich, in den benachbarten Fluidpassagen eines Mikrostrukturreaktors jeweils thermisch zueinander komplementäre Reaktionen ablaufen zu lassen, d.h. in der einen Fluidpassage eine exotherme Reaktion vorzunehmen, die die Prozesswärme für die Durchführung einer endothermen Reaktion in der unmittelbar benachbarten Fluidpassage liefert. Insbesondere bei der Verwendung temperaturempfindlicher Katalysatoren in einer der beiden Fluidpassagen führte dies bisher im Regelfall zu einer Beschädigung des temperaturempfindlichen Katalysators und somit zu einer Zerstörung des Mikrostrukturreaktors. Darüber hinaus muss auch bei der Verwendung temperaturstabiler Katalysatoren eine Beeinträchtigung der Funktionsdauer des jeweiligen Reaktors in Kauf genommen werden, da mit zunehmender Gebrauchsdauer unvermeidbar eine gewisse Alterung des Katalysators in der jeweiligen Reaktionszone der beiden Passagen zu verzeichnen ist. Dies führt dazu, dass insbesondere bei einem Gegenstrombetrieb in der Fluidführung die jeweils aktiven Reaktionszonen der beiden Passagen, die zu Beginn der Einsatzzeit des Mikrostrukturreaktors noch örtlich deckungsgleich waren, immer mehr auseinanderdriften. Das heißt also, dass die Stelle des Wärmebedarfs für die endotherme Reaktion nicht mehr "deckungsgleich" (d.h. unmittelbar benachbart) mit der Stelle der Wärmeerzeugung durch die exotherme Reaktion ist. Die zwangsläufige Folge davon sind entsprechende Verschlechterungen des Aktivitäts- und Selektivitätsverhaltens des Mikrostrukturreaktors.

Aus der DE 39 26 466 A1 ist ein Mikrostrukturreaktor bekannt, in dem die Vermischung der beiden Edukte, die innerhalb des Mikrostrukturreaktors miteinander reagieren sollen, nicht vor dem Mikrostrukturreaktor, sondern erst innerhalb des Mikrostrukturreaktors erfolgt. Dieser bekannte Mikrostrukturreaktor ist aus einer Vielzahl von unterschiedlich strukturierten Folien zusammengesetzt, die in einer festgelegten Schichtenfolge übereinandergestapelt und dicht miteinander verbunden sind. Eine solche Schicht wird im Folgenden auch als Strömungskanalmodul bezeichnet. Dieser bekannte Mikrostrukturreaktor weist eine sich mehrfach wiederholende Schichtenfolge von jeweils drei verschiedenen Strömungskanalmodulen auf. Durch die zueinander parallelen Strömungskanäle eines ersten Strömungskanalmoduls wird ein erstes Edukt hindurchgeführt. In diesem ersten Strömungskanalmodul findet auch die chemische Reaktion statt. Das dazu erforderliche zweite Edukt wird jedoch nicht zusammen mit dem ersten Edukt in die Strömungskanäle des ersten Strömungskanalmoduls eingeführt, sondern wird erst innerhalb des Mikrostrukturreaktors mit dem ersten Edukt vermischt. Hierzu ist jeweils ein zweites Strömungskanalmodul vorgesehen, dessen Strömungskanäle senkrecht zu den Strömungskanälen des ersten Strömungskanafmoduls verlaufen und sich nur über einen Teil der Reaktorgrundfläche erstrecken. Im übrigen Teil der Reaktorgrundfläche weist dieses zweite Strömungskanalmodul keine Strömungskanäle auf, sondern ist glattflächig ausgebildet. Zwischen dem ersten und dem zweiten Strömungskanalmodul ist jeweils ein drittes Strömungskanalmodul angeordnet, welches im wesentlichen in dem Teil der Reaktorgrundfläche, in dem das zweite Strömungskanalmodul keine Strömungskanäle aufweist, mit Strömungskanälen für die Durchleitung eines Kühlmediums für die Abführung der im Reaktor entstehenden Prozesswärme versehen ist. Diese Strömungskanäle für das Kühlmedium verlaufen ebenfalls senkrecht zu den Strömungskanälen des ersten Strömungskanalmoduls. Im Bereich der nicht von Strömungskanälen durchzogenen Grundfläche des dritten Strömungskanalmoduls ist ein schräg zu den Strömungskanälen des ersten Strömungskanalmoduls verlaufender länglicher Wanddurchbruch angeordnet. Dieser Wanddurchbruch stellt eine Strömungsverbindung zwischen den Strömungskanälen des ersten und des zweiten Strömungskanalmoduls sicher. Dieser Wanddurchbruch stellt somit einen Mischungsraum für die Vermischung des ersten und des zweiten Edukts dar. Aufgrund dieser speziellen körperlichen Gestaltung strömen die noch unvermischten Edukte jeweils durch unterschiedlich lange Strömungskanäle. In jedem dieser Mikrokanäle stellen sich unterschiedliche Strömungsverhältnisse aufgrund des Druckverlustes über die jeweilige Kanallänge ein, wodurch ein inhomogenes Vermischen stattfindet und sich ein Konzentrationsprofil über die Kanallänge der beiden Eduktströme einstellt. Dies wirkt sich auch auf die Temperatur- und Konzentrationssteuerung im Reaktor und somit auf den Umsatz und die Selektivität negativ aus. Auch in diesem Reaktor kann es zur Ausbildung von "hot spots" kommen, also zu lokalen Überhitzungen bei stark exothermen Prozessen infolge einer undefinierten Vermischung der beiden Edukte und insbesondere auch wegen des Umstandes, dass die Kühlzone und der Wanddurchbruch für die Zuführung des zweiten Edukts jeweils nicht unmittelbar benachbart sondern hintereinander angeordnet sind. Hinzukommt, dass die vorhandene Kreuzstromkühlung ungeeignet für temperatursensitive Reaktionen ist, weil sich eine inhomogene Temperaturverteilung einstellt.

Aufgabe der Erfindung ist es daher, einen in Mikrostrukturtechnik ausgebildeten Reaktor dahingehend zu verbessern, dass die vorstehend genannten Nachteile vermieden oder zumindest wesentlich abgemildert werden. Ferner soll ein entsprechend verbessertes Verfahren zur Durchführung chemischer Reaktionen in einem Mikrostrukturreaktor angegeben werden.

Gelöst wird diese Aufgabe erfindungsgemäß durch einen Mikrostrukturreaktor mit den im Patentanspruch 1 angegebenen Merkmalen. Vorteilhafte Weiterbildungen dieses Mikrostrukturreaktors ergeben sich aus den Unteransprüchen. Im Anspruch 12 sind die Merkmale eines erfindungsgemäßen Verfahrens zur Durchführung chemischer Reaktionen in einem Mikrostrukturreaktor angegeben.

Die vorliegende Erfindung stellt einen Reaktionsapparat zur Verfügung, in dem eine gezielte Dosierung eines Eduktstromes in einen anderen Eduktstrom erfolgen kann, um ein reaktionsfähiges Gemisch zu bilden. Dies wird dadurch ermöglicht, dass die Funktionen des Vermischers und des Reaktors in einem kombinierten Reaktionsapparat miteinander verbunden werden. Die Dosierung in diesem Reaktionsapparat ist örtlich kontrollierbar, wobei einer der eduktbeladenen Fluidströme an mehreren verschiedenen Stellen entlang des zweiten eduktbeladenen Fluidstroms in diesen eingedüst wird. Die Anzahl der Zudosierungsstellen eines Eduktstroms in den zweiten Eduktstrom beeinflusst signifikant die Temperaturverteilung im Reaktor. Je mehr Zudosierungsstellen vorhanden sind, desto gleichmäßiger kann der Temperaturverlauf eingestellt werden. Beispielsweise bei stark exothermen schnellen Reaktionen lässt sich so durch die örtlich verteilte Zudosierung eines Eduktes in den Strom des anderen Eduktes ein definiertes Temperaturprofil in den Strömungskanälen (Mikrokanäle) der Reaktionspassage realisieren. Da die Reaktionstemperatur einen großen Einfluss auf die Reaktionsgeschwindigkeit und Selektivität hat, wirkt sich dies positiv auf das durch die Reaktion erzielbare Produktspektrum aus. Vorteilhafte Anwendungen für einen solchen Reaktionsapparat sind beispielsweise in der selektiven Oxydation von CO in einem wasserstoffreichen Gas oder auch in der partiellen Oxydation von Kohlenwasserstoffen zu sehen. Dadurch, dass zusätzlich zu den Fluidpassagen für die beiden miteinander reagierenden Eduktströme noch eine Fuidpassage für ein Wärmeträgermedium vorgesehen wird, kann bei stark exothermen Reaktionen die Reaktionswärme abgeführt werden. Als Wärmeträgermedium kommen hier nicht nur übliche Kühlgase oder Kühlflüssigkeiten in Frage, sondern die durch die exotherme Reaktion freigesetzte Wärme kann auch zur Beheizung einer endothermen Reaktion benutzt werden, die in der zusätzlichen Fluidpassage erfolgt. Um diese endotherme Reaktion in gleicher Weise optimal zu steuern, kann vorgesehen werden, dass die Eduktströme der jeweiligen Reaktionspartner der endothermen Reaktion örtlich verteilt an vielen Stellen entlang eines der beiden Eduktströme in diesen eingedüst werden.

Durch die örtlich verteilte und dadurch zeitlich verzögerte Zudosierung eines Eduktstromes einer exothermen Reaktion in den zweiten Eduktstrom kann durch die Reaktion nur eine definierte Wärmemenge am jeweiligen Ort der Zudosierung freigesetzt werden. Durch die gezielte Zudosierung entlang des Fluidstroms eines Eduktes können somit hot-spot-Bildungen vermieden werden. Die Zudosierung des einen Eduktes in den anderen Eduktstrom kann über Strömungskanäle erfolgen, die parallel oder auch quer, insbesondere senkrecht zu den Strömungskanälen des anderen Eduktstroms verlaufen. Um die zudosierten Mengen jeweils z.B. konstant zu halten, ist zu beachten, dass aufgrund des Druckabfalls über die Kanallänge der jeweils zudosierte Massenstrom bei konstanter Kanalgeometrie und Dosieröffnung abnimmt. Aus diesem Grunde sieht die Erfindung vorteilhaft vor, dass die Größe der Dosieröffnungen und/oder die Kanalgeometrie entlang der Kanallänge verändert werden. Je größer der Druckabfall, um so größer wird die Dosieröffnung an der jeweiligen Zudosierungsstelle gewählt. Grundsätzlich ist es auch möglich, die als Dosieröffnungen dienenden Wandöffnungen im Mikrostrukturreaktor durch die Poren eines hochporösen Materials zu realisieren, durch die einer der Eduktströme kontrolliert in den anderen Eduktstrom überströmt.

Grundsätzlich kann durch eine Variation der Größe der Wandöffnungen und deren Verteilung über die Länge der Strömungskanäle nahezu jedes beliebige Temperatur- und Konzentrationsprofil im Mikrostrukturreaktor realisiert werden. Es ist nicht immer zweckmäßig, gleichförmige Temperatur- und Konzentrationsprofile einzustellen. Beispielsweise ist es zur Minimierung des CO-Anteils bei der Dampfreformierung von Methanol vorteilhaft, vom Reaktoreingang bis zum Reaktorausgang ein Temperaturgefälle einzustellen.

Die Erfindung stellt somit einen Mikrostrukturreaktor zur Durchführung mindestens einer chemischen Reaktion zwischen zwei Reaktionspartnern zur Verfügung, die als Edukte separat in den Mikrostrukturreaktor einführbar und nach erfolgter Reaktion als Produkt daraus wieder abführbar sind. Der Mikrostrukturreaktor weist einen abwechselnd schichtweisen Aufbau von flach ausgebildeten Strömungskanalmodulen in Mikrostrukturtechnik auf, wobei jeweils ein erstes Strömungskanalmodul mit Strömungskanälen, die einen Eingang und einen Ausgang aufweisen, für ein erstes Edukt vorgesehen ist. Dieses erste Strömungskanalmodul hat zwei Flachseiten und ist jeweils an einer ersten Flachseite mit einem zweiten Strömungskanalmodul, das Strömungskanäle aufweist, in die ein zweites Edukt von außen einführbar ist, großflächig verbunden. In der Flachseite zwischen dem ersten und dem zweiten Strömungskanalmodul ist eine Vielzahl von Wandöffnungen in der Weise vorgesehen, dass die Strömungskanäle des ersten Strömungskanalmoduls jeweils über eine Vielzahl von Wandöffnungen, die über die Länge der einzelnen Strömungskanäle verteilt sind, in Strömungsverbindung mit den Strömungskanälen des zweiten Strömungskanalmoduls stehen. Darüber hinaus ist jeweils das erste Strömungskanalmodul auf seiner zweiten Flachseite mit einem dritten Strömungskanalmodul großflächig verbunden, durch das ein Medium zur Aufnahme oder Abgabe von Wärme hindurchleitbar ist. Durch die großflächige Verbindung ist ein effektiver Wärmeaustausch zwischen den Strömungskanalmodulen möglich.

Die Strömungskanäle des dritten Strömungskanalmoduls können für die Durchleitung eines flüssigen oder gasförmigen Wärmeträgermediums oder aber auch für die Durchführung einer endothermen oder exothermen zweiten chemischen Reaktion eingerichtet sein, die in dem aus mindestens zwei weiteren Reaktionspartnern bestehenden Stoffgemisch des durch die Strömungskanäle des dritten Strömungskanalmoduls geleiteten Mediums stattfindet. Wenn in dem ersten Strömungskanalmodul eine exotherme Reaktion stattfindet, ist die Reaktion in dem dritten Strömungskanalmodul selbstverständlich eine endotherme und umgekehrt. Für den Fall, dass in dem dritten Strömungskanalmodul eine Reaktion zwischen zwei Eduktströmen stattfinden soll, kann vorteilhaft vorgesehen sein, dass dieses dritte Strömungskanalmodul seinerseits aus zwei Strömungskanalteilmodulen zusammengesetzt ist, die in entsprechender Weise wie das erste Strömungskanalmodul und das zweite Strömungskanalmodul ausgebildet und zusammengesetzt sind, so dass sich jeweils eine Folge von vier miteinander verbundenen Strömungskanalmodulen im Mikrostrukturreaktor ergibt. Diese Schichtfolge aus drei oder vier Strömungskanalmodulen kann sich innerhalb des Mikrostrukturreaktors mehrfach wiederholen, so dass modulartig beliebige Leistungsstufen des Mikrostrukturreaktors gewählt werden können.

Die Reihenfolge der einzelnen Schichten in den Schichtfolgen kann gleichbleibend sein, kann aber auch für manche Anwendungen vorteilhaft variiert werden. So kann beispielsweise vorgesehen sein, dass jede zweite Schicht von einem ersten Strömungskanalmodul gebildet wird und somit die zweiten und dritten Strömungskanalmodule jeweils auf zwei unmittelbar benachbart zu ihnen angeordnete erste Strömungskanalmodule durch Zuführung des zweiten Edukts bzw. durch Wärmeaustausch einwirken. Die zweiten Strömungskanalmodule haben dabei also Wandöffnungen an ihrer oberen und ihrer unteren Flachseite zu den jeweils unmittelbar aufliegenden beiden ersten Strömungskanalmodulen.

Vorteilhaft werden die Strömungskanalmodule als vergleichsweise dünne folienartige Körper gefertigt, die jeweils auf einer Flachseite nach außen offen eingearbeitete Strömungskanäle aufweisen. Durch das schichtweise Übereinanderliegen der einzelnen Folien werden diese Strömungskanäle nach oben jeweils von der Unterseite der darüber liegenden Folie abgedichtet. Es können aber auch von vornherein in Umfangsrichtung geschlossene Strömungskanäle vorgesehen sein. Diese können beispielsweise so hergestellt werden, dass jeweils zwei spiegelbildlich strukturierte Folien mit offenen Kanälen erzeugt, deckungsgleich aufeinander gelegt und dicht miteinander verbunden werden.

Vorteilhaft werden die in dem Mikrostrukturreaktor ablaufenden chemischen Reaktionen als katalytische Reaktionen durchgeführt. Hierzu ist es zweckmäßig, den jeweiligen Katalysator in fester Form in die Strömungskanäle bzw. auf deren Wandungen aufzubringen, um durch den Kontakt mit den als Reaktionspartner vorgesehenen Edukten den Verlauf der chemischen Reaktion auszulösen oder zu unterstützen.

Während der Eduktstrom des ersten Eduktes an einer Seite des Mikrostrukturreaktors eingeführt und nach Durchlaufen der gesamten Grundfläche des Mikrostrukturreaktors auf der gegenüberliegenden Seite nach erfolgter Reaktion wieder austritt, kann für die Einspeisung des zweiten Edukts in die Strömungskanäle des zweiten Strömungskanalmoduls eine einzige Einspeiseöffnung vorgesehen sein. Das zweite Edukt gelangt durch die Wandöffnungen am Boden oder an der Decke des jeweiligen Strömungskanals in die Strömungskanäle des unmittelbar benachbarten ersten Strömungskanalmoduls für das erste Edukt und wird dann als Teil des erzeugten Produktes nach Durchführung der chemischen Reaktion aus dem ersten Strömungskanalmodul abgeleitet. Die Strömungskanäle des zweiten Strömungskanalmoduls können daher auf einer Seite verschlossen sein. Es kann aber auch vorteilhaft vorgesehen werden, das zweite Edukt an beiden Enden der jeweiligen Strömungskanäle des zweiten Strömungskanalmoduls gleichzeitig einzuspeisen. Dadurch lässt sich der Druckverlust deutlich reduzieren, da das zweite Edukt dann nur noch maximal die halbe der Länge der jeweiligen Strömungskanäle des zweiten Strömungskanalmoduls durchströmen muss.

Die Wandöffnungen können bei Bedarf auch sehr klein und zahlreich gewählt werden durch gezielte Einstellung einer entsprechenden Porosität in den Kanalwandungen. Dies kann beispielsweise durch Verwendung spezieller Materialien wie Sintermetalle und Keramikwerkstoffe erfolgen.

Um nach Möglichkeit örtlich jeweils gleich große Mengen des zweiten Eduktes in das erste Edukt einzuspeisen, empfiehlt es sich, zur Kompensation des Druckverlustes jeweils unterschiedlich große Wandöffnungen im Verlauf der Strömungskanallänge zu wählen. Die Größe der Wandöffnungen steht im Prinzip bei konstanter Kanalgeometrie in umgekehrtem Verhältnis zu dem zu erwartenden Druckabfall des durch die Strömungskanäle des zweiten Strömungskanalmoduls strömenden zweiten Eduktes.

Das Verfahren zur Durchführung chemischer Reaktionen zwischen einem ersten Edukt und einem zweiten Edukt in einem Mikrostrukturreaktor, bei dem das erste Edukt an einem Ende des Mikrostrukturreaktors in die Strömungskanäle eingespeist und nach Durchströmen der gesamten Länge der jeweiligen Strömungskanäle des Mikrostrukturreaktors und erfolgter Reaktion am anderen Ende des Mikrostrukturreaktors als Produkt wieder abgezogen wird und bei dem das zweite Edukt auf dem Weg zwischen dem Anfang und dem Ende des Mikrostrukturreaktors in die einzelnen Strömungskanäle zur Bildung eines reaktionsfähigen Gemisches der beiden Edukte eingeführt wird, sieht erfindungsgemäß vor, dass das zweite Edukt zur Steuerung des Temperaturverlaufs in den Strömungskanälen jeweils an einer Vielzahl von Stellen, die entlang der Länge jedes der Strömungskanäle des Mikrostrukturreaktors verteilt sind, in kontrollierter Menge eingedüst wird. Auf diese Weise lässt sich das Temperatur- und Konzentrationsprofil entsprechend den jeweiligen Bedürfnissen einstellen.

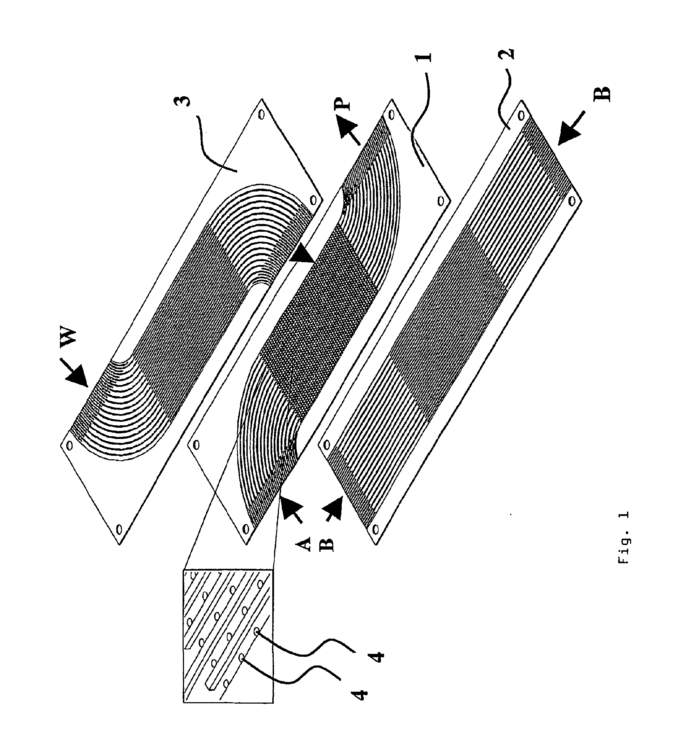

Nachfolgend wird die Erfindung anhand des in der einzigen Figur dargestellten Ausführungsbeispiels, das exemplarisch eine Schichtfolge von drei Strömungskanalmodulen in schematischer Darstellung zeigt, näher erläutert.

Das in der Mitte dargestellte Strömungskanalmodul 1 weist einen Eingang für ein erstes Edukt A und diesem gegenüberliegend einen Ausgang für einen aus der jeweiligen chemischen Reaktion gebildeten Produktstrom P auf. Wie aus der Detaildarstellung deutlicher hervorgeht, sind am Boden der in Mikrostrukturtechnik ausgeführten Strömungskanäle des Strömungskanalmoduls 1 über die Länge der einzelnen Strömungskanäle jeweils eine Vielzahl von Wandöffnungen 4 vorgesehen. Unmittelbar unter dem Strömungskanalmodul 1 ist ein zweites Strömungskanalmodul 2 angeordnet, das ebenfalls mit einer Vielzahl von Mikrostrukturkanälen für ein Edukt B ausgebildet ist. Bei beiden Strömungskanalmodulen 1, 2 sind die einzelnen Strömungskanäle jeweils von oben offen in den folienartig, also flach und dünn ausgebildeten Grundkörper (z.B. aus Metall oder einem Siliziumsubstrat oder Keramik) des jeweiligen Moduls eingearbeitet. Erst durch das unmittelbare Aufeinanderlegen und Zusammenfügen der beiden Strömungskanalmodule werden die Strömungskanäle des Strömungskanalmoduls 2 nach oben abgedeckt. Im vorliegenden Fall ist vorgesehen, das Edukt B von beiden Endseiten der Strömungskanäle in das Strömungskanalmodul 2 einzuspeisen. Die Strömungskanäle des Strömungskanalmoduls 1 werden nach oben durch ein drittes Strömungskanalmodul 3 abgedeckt, das ebenfalls in Mikrostrukturtechnik ausgeführt ist. Wie durch die Pfeile angedeutet ist, kann durch diese Strömungskanäle ein Wärmetauscherfluid W geführt werden, um im Falle einer exothermen Reaktion in den Strömungskanälen des Strömungskanalmoduls 1 Wärme abzuführen oder im Falle einer endothermen Reaktion die erforderliche Reaktionswärme zuzuführen. Die in gleicher Weise wie bei den beiden anderen Strömungskanalmodulen 1, 2 nach oben offen ausgeführten Strömungskanäle des Strömungskanalmoduls 3 werden durch eine nicht dargestellte Abdeckplatte nach oben abgedeckt oder, falls mehrere gleichartige Schichtfolgen übereinander vorgesehen sind, durch die Unterseite des nächsten Strömungskanalmoduls 2 (nicht dargestellt).

Die Arbeitsweise dieses als Explosionsdarstellung wiedergegebenen Folientripplets eines Mikrostrukturreaktors ist wie folgt: Ein Eduktstrom A wird von der linken Seite in die Strömungskanäle des Strömungskanalmoduls 1 eingeführt. Gleichzeitig wird von den beiden schmalen Endseiten entsprechend den eingetragenen Pfeilen ein Eduktstrom B in die Strömungskanäle des Strömungskanalmoduls 2 eingeführt. Da an der Unterseite des Strömungskanalmoduls 1 jeweils Wandöffnungen eine Strömungsverbindung zwischen den Strömungskanälen des Strömungskanalmoduls 1 und des Strömungskanalmoduls 2 herstellen, kann der beidseitig zugeführte Eduktstrom B durch die zahlreichen Wandöffnungen in örtlich jeweils begrenzter Menge in die Strömungskanäle des Strömungskanalmoduls 1 übertreten und mit dem Eduktstrom A zur Reaktion gebracht werden. Im Falle einer katalytischen Reaktion sind vorzugsweise die Strömungskanalwände des Strömungskanalmoduls 1 mit einer katalytischen Beschichtung versehen. Bei einer exothermen Reaktion kann die entsprechend den zugegebenen Teilmengen des Eduktstroms B in gleichmäßiger Verteilung über die Länge der Strömungskanäle des Strömungskanalmoduls 1 freigesetzte Reaktionswärme durch ein Wärmetauscherfluid W abgeführt werden, das durch das dritte Strömungskanalmodul 3 hindurchgeführt wird. Anstelle eines üblichen Wärmetauscherfluids kann beispielsweise auch eine Eduktmischung eingesetzt werden, die endotherm reagiert und auf diese Weise die freigesetzte Reaktionswärme aus dem Strömungskanalmodul 1 aufnimmt.

Die in der Figur dargestellte Schichtenfolge kann sich beliebig häfig durch Aufeinanderstapelung entsprechender Strömungskanalmodule 1, 2, 3 wiederholen, so dass sich eine Folge (Bezugszffern) "3, 1, 2, 3, 1, 2, 3, 1, 2, usw." ergibt. Man könnte aber auch jede zweite Schicht aus einem zweiten Strömungskanalmodul 2 bilden, das seinerseits jeweils von zwei ersten Strömungskanalmodulen 1 banachbart ist, während die ersten Strömungskanalmodule 1 an ihrer zweiten Flachseite jeweils mit einem dritten Strömungskanalmodul 3 in Wärmetauschkontakt stehen. Dadurch ergibt sich eine Schichtfolge nach dem Muster "2, 1, 3, 1, 2, 1, 3, 1, 2, 1, 3, 1, 2 usw.". Jedes zweite Strömungskanalmodul 2 führt daher das zweite Edukt in jeweils beide mit ihm unmittelbar benachbarte erste Strömungskanalmodule 1. Das zweite Strömungskanalmodul 2 hat daher in diesem Fall jeweils sowohl an seiner oberen als auch seiner unteren Flachseite Wandöffnungen für die Edukteindüsung. In entsprechender Weise stehen die dritten Strömungskanalmodule 3 jeweils in Wärmeaustauschkontakt zu beiden unmittelbar benachbarten ersten Strömungskanalmodulen 1.

Typischerweise weisen die einzelnen Strömungskanäle der drei Strömungskanalmodule 1, 2, 3 eine charakteristische Querabmessung im Bereich von 20 bis 2000 µm, vorzugsweise im Bereich von 20 bis 500 µm auf. Die Größe der Wandöffnungen 4 kann in der Größenordnung der charakteristischen Querabmessung der einzelnen Strömungskanäle liegen, kann aber auch deutlich kleiner sein und beispielsweise 1 bis 100 µm betragen. Durch die Form der Wandöffnungen kann die Geschwindigkeit der Vermischung gezielt beeinflusst werden. Beim Eindüsen durch eine sehr kleine Wandöffnung wird eine schnelle Vermischung der beiden Eduktströme stattfinden, während durch größere Öffnungen die Vermischung bevorzugt durch Diffusion erfolgt. Durch eine Variierung der Größe der Wandöffnungen im Verlauf der Länge der Strömungskanäle kann trotz des eintretenden Druckverlustes eine mengenmäßig etwa gleich starke Eindüsung des Eduktstroms B in den Eduktstrom A für jede Eindüsungsstelle gewährleistet werden. Eine weitere Beeinflussungsmöglichkeit zur Berücksichtigung des Druckverlustes besteht in einer entsprechenden Änderung der Kanalgeometrie (Querschnittsvergrößerung) über die Länge der Strömungskanäle. Auf diese Weise kann eine außerordentlich gleichmäßige Temperaturverteilung über die gesamte Grundfläche des Mikrostrukturreaktors gewährleistet werden.

Sehr vorteilhaft lässt sich der erfindungsgemäße Mikrostrukturreaktor auch nutzen, wenn für die Durchführung einer endothermen Reaktion sehr temperaturempfindliche Katalysatoren verwendet werden müssen. In diesem Fall kann die endotherme katalytische Reaktion im Strömungskanalmodul 3 erfolgen, während das Strömungskanalmodul 1 die für die endotherme Reaktion erforderliche Wärme liefert. Diese Wärme kann in dem Strömungskanalmodul 1 durch eine kontrollierte katalytische Verbrennung erzielt werden, indem beispielsweise ein Brenngas als Edukstrom A in das Strömungskanalmodul 1 eingeführt und der für die Verbrennung erforderliche Sauerstoff als Eduktstrom B über das zweite Strömungskanalmodul 2 örtlich verteilt in jeweils dosierter Menge durch die Wandöffnungen 4 zugesetzt wird. Durch die begrenzte Sauerstoffzufuhr entlang der Strömungskanallänge wird eine sehr gute Temperaturführung ermöglicht, die die Entstehung von hot spots vermeidet, obwohl die katalytische Verbrennung eine sehr schnell ablaufende exotherme Reaktion darstellt. Die in dem dritten Strömungskanalmodul stattfindende endotherme Reaktion kann beispielsweise eine Wasserdampfreformierung von Methanol an einem Kupfer/Zinkoxid-Katalysatorsystem sein. Ohne die erfindungsgemäß kontrolliert steuerbare Verbrennungsreaktion würde der Katalysator bereits im Eingangsbereich durch die Bildung von hot spots irreversibel geschädigt werden.

Der erfindungsgemäße Mikrostrukturreaktor ist besonders vorteilhaft für alle Reaktionen, deren Umsatz und Selektivität stark von der Reaktionstemperatur abhängig sind und für die Kopplung endothermer und exothermer Reaktionen, die ein definiertes Temperaturprofil voraussetzen.

## Patentansprüche

1. Mikrostrukturreaktor zur Durchführung mindestens einer chemischen Reaktion zwischen jeweils zwei Reaktionspartnern, die als Edukte separat in den Mikrostrukturreaktor einführbar und nach erfolgter Reaktion als Produkt daraus abführbar sind, mit einem abwechselnd schichtweisen Aufbau von flach ausgebildeten Strömungskanalmodulen (1, 2, 3) in Mikrostrukturtechnik, wobei jeweils ein erstes Strömungskanalmodul (1) mit Strömungskanälen, die einen Eingang und einen Ausgang aufweisen, für ein erstes Edukt vorgesehen ist, mit dem jeweils ein zweites Strömungskanalmodul (2) mit Strömungskanälen, in die ein zweites Edukt von außen einführbar ist, an einer ersten Flachseite des ersten Strömungskanalmoduls (1) großflächig verbunden ist, wobei in der Flachseite zwischen dem ersten (1) und dem zweiten Strömungskanalmodul (2) eine Vielzahl von Wandöffnungen (4) in der Weise vorgesehen ist, dass die Strömungskanäle des ersten Strömungskanalmoduls (1) jeweils über eine Vielzahl von Wandöffnungen (4), die über die Länge der einzelnen Strömungskanäle verteilt sind, in Strömungsverbindung mit den Strömungskanälen des zweiten Strömungskanalmoduls (2) stehen, und wobei jeweils das erste Strömungskanalmodul (1) auf seiner zweiten Flachseite mit einem dritten Strömungskanalmodul (3), durch das ein Medium zur Aufnahme oder Abgabe von Wärme hindurchleitbar ist, großflächig verbunden ist.

2. Mikrostrukturreaktor nach Anspruch 1,
**dadurch gekennzeichnet,**
**dass** die Strömungskanäle des dritten Strömungskanalmoduls (3) für die Durchleitung eines flüssigen oder gasförmigen Wärmeträgermediums eingerichtet sind.

3. Mikrostrukturreaktor nach Anspruch 1,
**dadurch gekennzeichnet,**
**dass** die Strömungskanäle des dritten Strömungskanalmoduls (3) für die Durchführung einer endothermen oder exothermen zweiten chemischen Reaktion ausgebildet sind, die in dem aus mindestens zwei weiteren Reaktionspartnern bestehenden Stoffgemisch des durch die Strömungskanäle des dritten Strömungskanalmoduls (3) geleiteten Mediums stattfindet.

4. Mikrostrukturreaktor nach Anspruch 3,
**dadurch gekennzeichnet,**
**dass** das dritte Strömungskanalmodul (3) seinerseits aus zwei Strömungskanalteilmodulen zusammengesetzt ist, die in entsprechender Weise wie das erste Strömungskanalmodul (1) und das zweite Strömungskanalmodul (2) ausgebildet und zusammengesetzt sind, so dass sich jeweils eine Folge von vier miteinander verbundenen Strömungskanalmodulen ergibt.

5. Mikrostrukturreaktor nach einem der Ansprüche 1 bis 4,
**dadurch gekennzeichnet,**
**dass** sich die Schichtfolge der Strömungskanalmodule (1, 2, 3) innerhalb eines Mikrostrukturreaktors mehrfach wiederholt.

6. Mikrostrukturreaktor nach einem der Ansprüche 1 bis 5,
**dadurch gekennzeichnet,**
**dass** die Strömungskanalmodule (1, 2, 3) als dünne Folien mit jeweils auf einer Flachseite nach außen offen eingearbeiten Strömungskanälen ausgebildet sind.

7. Mikrostrukturreaktor nach einem der Ansprüche 1 bis 6,
**dadurch gekennzeichnet,**
**dass** zumindest die chemische Reaktion in dem ersten Strömungskanalmodul (1) durch einen auf den Wandungen der Strömungskanäle aufgebrachten oder in die Strömungskanäle eingebrachten festen Katalysator auslösbar oder unterstützbar ist.

8. Mikrostrukturreaktor nach einem der Ansprüche 1 bis 7,
**dadurch gekennzeichnet,**
**dass** die Strömungskanäle des zweiten Strömungskanalmoduls (2) jeweils an ihren beiden Enden eine Einspeisung für das zweite Edukt ausweisen.

9. Mikrostrukturreaktor nach einem der Ansprüche 1 bis 8,
**dadurch gekennzeichnet,**
**dass** die Wandöffnungen (4) durch eine Porosität der Wandung zwischen den Strömungskanälen des ersten (1) und des zweiten Strömungskanalmoduls (2) gebildet sind.

10. Mikrostrukturreaktor nach einem der Ansprüche 1 bis 8,
**dadurch gekennzeichnet,**
**dass** die Wandöffnungen (4) in umgekehrtem Verhältnis zu dem zu erwartenden Druckabfall des durch die Strömungskanäle des zweiten Strömungskanalmoduls (2) strömenden zweiten Eduktes eine entlang der Strömungskanallänge jeweils zunehmende Größe aufweisen.

11. Mikrostrukturreaktor nach einem der Ansprüche 1 bis 10,
**dadurch gekennzeichnet,**
**dass** die Strömungskanäle des ersten Strömungskanalmoduls (1) parallel oder senkrecht zu den Strömungskanälen des zweiten Strömungskanalmoduls (2) verlaufen.

12. Verfahren zur Durchführung chemischer Reaktionen zwischen einem ersten Edukt und einem zweiten Edukt in einem Mikrostrukturreaktor nach einem der Ansprüche 1-11 wobei das erste Edukt an einem Ende des Mikrostrukturreaktors in die Strömungskanäle eingespeist und nach Durchströmen der gesamten Länge der jeweiligen Strömungskanäle des Mikrostrukturreaktors und erfolgter Reaktion am anderen Ende des Mikrostrukturreaktors als Produkt abgezogen wird und wobei das zweite Edukt auf dem Weg zwischen dem Anfang und dem Ende des Mikrostrukturreaktors in die einzelnen Strömungskanäle zur Bildung eines reaktionsfähigen Gemisches der beiden Edukte eingeführt wird,
**dadurch gekennzeichnet,**
**dass** das zweite Edukt zur Steuerung des Temperatur- und Konzentrationsverlaufs in den Strömungskanälen jeweils an einer Vielzahl von Stellen, die entlang der Länge jedes der Strömungskanäle des Mikrostrukturreaktors verteilt sind, in kontrollierter Menge eingedüst wird.

## Claims

1. Microstructure reactor for carrying out at least one chemical reaction between two reactants in each case, which can be introduced separately into the microstructure reactor as starting materials and after the reaction has taken place can be removed therefrom as product, having a layered structure of alternating flow channel modules (1, 2, 3) of flat construction produced by microstructure technology, wherein in each case a first flow channel module (1) having flow channels that comprise an inlet and an outlet is provided for a first reactant, to which a second flow channel module (2) having flow channels into which a second reactant can be introduced from outside is connected flat to a first flat side of the first flow channel module (1), while in the flat side between the first (1) and second flow channel module (2) are provided a plurality of wall openings (4) such that the flow channels of the first flow channel module (1) are distributed over a plurality of wall openings (4) that are distributed over the length of the individual flow channels, are fluidically connected to the flow channels of the second flow channel module (2), and wherein the first flow channel module (1) in each case is connected flat on its second flat side to a third flow channel module (3) through which a medium can be passed in order to absorb or give off heat.

2. Microstructure reactor according to claim 1, **characterised in that** the flow channels of the third flow channel module (3) are arranged so as to convey a liquid or gaseous heat carrying medium.

3. Microstructure reactor according to claim 1, **characterised in that** the flow channels of the third flow channel module (3) are constructed for carrying out an endothermic or exothermic second chemical reaction which takes place in the substance mixture of the medium, comprising at least two other reactants, that passes through the flow channels of the third flow channel module (3).

4. Microstructure reactor according to claim 3, **characterised in that** the third flow channel module (3) in turn is made up of two partial flow channel modules which are constructed and assembled in a corresponding manner to the first flow channel module (1) and the second flow channel module (2) so as to obtain a sequence of four flow channel modules connected to one another.

5. Microstructure reactor according to one of claims 1 to 4, **characterised in that** the sequence of layers in the flow channel modules (1, 2, 3) is repeated several times within one microstructure reactor.

6. Microstructure reactor according to one of claims 1 to 5, **characterised in that** the flow channel modules (1, 2, 3) are constructed as thin films each with flow channels incorporated on one flat side so as to open outwardly.

7. Microstructure reactor according to one of claims 1 to 6, **characterised in that** at least the chemical reaction in the first flow channel module (1) can be initiated or assisted by a solid catalyst provided on the walls of the flow channels or introduced into the flow channels.

8. Microstructure reactor according to one of claims 1 to 7, **characterised in that** the flow channels of the second flow channel module (2) each have a feed for the second reactant at both ends.

9. Microstructure reactor according to one of claims 1 to 8, **characterised in that** the wall openings (4) are formed by pores in the wall between the flow channels of the first (1) and second flow channel module (2).

10. Microstructure reactor according to one of claims 1 to 8, **characterised in that** the wall openings (4) increase in size along the length of the flow channels, in inverse proportion to the expected drop in pressure of the second reactant flowing through the flow channels of the second flow channel module (2) .

11. Microstructure reactor according to one of claims 1 to 10, **characterised in that** the flow channels of the first flow channel module (1) run parallel or perpendicularly to the flow channels of the second flow channel module (2).

12. Method of carrying out chemical reactions between a first reactant and a second reactant in a microstructure reactor according to one of claims 1 to 11, wherein the first reactant is fed into the flow channels at one end of the microstructure reactor and after it has flowed through the entire length of the respective flow channels of the microstructure reactor and the reaction has taken place, it is removed as product at the other end of the microstructure reactor, and wherein the second reactant is introduced into the individual flow channels on the route between the start and finish of the microstructure reactor, in order to form a reactive mixture of the two reactants, **characterised in that** in order to control the temperature and concentration patterns in the flow channels, the second reactant is sprayed in through nozzles in controlled amounts at a plurality of locations distributed along the length of each of the flow channels of the microstructure reactor.

## Revendications

1. Réacteur à microstructure pour la réalisation d'au moins une réaction chimique entre respectivement deux agents réactifs qui peuvent être introduits comme éduits séparément dans le réacteur à microstructure et peuvent être évacués de celui-ci, une fois la réaction effectuée, comme produit, avec une structure par couches alternantes de modules de canal d'écoulement (1, 2, 3) réalisés de manière plate dans la technique de la microstructure, respectivement un premier module de canal d'écoulement (1) avec des canaux d'écoulement qui présentent une entrée et une sortie, étant prévu pour un premier éduit, auquel respectivement un deuxième module de canal d'écoulement (2) avec des canaux d'écoulement, dans lesquels un second éduit peut être introduit de l'extérieur, est relié sur une grande surface sur un premier côté plat du premier module de canal d'écoulement (1), dans le côté plat entre le premier (1) et le deuxième module de canal d'écoulement (2) étant prévue une pluralité d'ouvertures de paroi (4) de telle manière que les canaux d'écoulement du premier module de canal d'écoulement (1) se trouvent respectivement en liaison d'écoulement avec les canaux d'écoulement du deuxième module de canal d'écoulement (2) par le biais d'une pluralité d'ouvertures de paroi (4) qui sont réparties sur la longueur des canaux d'écoulement individuels, et respectivement le premier module de canal d'écoulement (1) étant relié sur une grande surface sur son second côté plat à un troisième module de canal d'écoulement (3), à travers lequel un produit peut être passé pour l'absorption ou la dissipation de chaleur.

2. Réacteur à microstructure selon la revendication 1,
**caractérisé en ce**
**que** les canaux d'écoulement du troisième module de canal d'écoulement (3) sont conçus pour le passage d'un produit caloporteur liquide ou gazeux.

3. Réacteur à microstructure selon la revendication 1,
**caractérisé en ce**
**que** les canaux d'écoulement du troisième module de canal d'écoulement (3) sont réalisés pour la réalisation d'une seconde réaction chimique endothermique ou exothermique qui a lieu dans le mélange se composant d'au moins deux autres agents réactifs du produit passé au travers des canaux d'écoulement du troisième module de canal d'écoulement (3).

4. Réacteur à microstructure selon la revendication 3,
**caractérisé en ce**
**que** le troisième module de canal d'écoulement (3) de son côté est composé de deux modules partiels de canal d'écoulement qui sont réalisés et composés de manière correspondante comme le premier module de canal d'écoulement (1) et le deuxième module de canal d'écoulement (2) de sorte qu'il résulte respectivement une suite de quatre modules de canal d'écoulement reliés les uns aux autres.

5. Réacteur à microstructure selon l'une quelconque des revendications 1 à 4,
**caractérisé en ce**
**que** la suite de couches des modules de canal d'écoulement (1, 2, 3) se répète plusieurs fois dans un réacteur à microstructure.

6. Réacteur à microstructure selon l'une quelconque des revendications 1 à 5,
**caractérisé en ce**
**que** les modules de canal d'écoulement (1, 2, 3) sont réalisés comme des films minces avec respectivement des canaux d'écoulement insérés de manière à être ouverts vers l'extérieur sur un côté plat.

7. Réacteur à microstructure selon l'une quelconque des revendications 1 à 6,
**caractérisé en ce**
**qu'**au moins la réaction chimique dans le premier module de canal d'écoulement (1) peut être déclenchée ou soutenue par un catalyseur fixe, appliqué sur les parois des canaux d'écoulement ou introduit dans les canaux d'écoulement.

8. Réacteur à microstructure selon l'une quelconque des revendications 1 à 7,
**caractérisé en ce**
**que** les canaux d'écoulement du deuxième module de canal d'écoulement (2) présentent respectivement sur leurs deux extrémités une alimentation pour le second éduit.

9. Réacteur à microstructure selon l'une quelconque des revendications 1 à 8,
**caractérisé en ce**
**que** les ouvertures de paroi (4) sont formées par une porosité de la paroi entre les canaux d'écoulement du premier (1) et du deuxième module de canal d'écoulement (2).

10. Réacteur à microstructure selon l'une quelconque des revendications 1 à 8,
**caractérisé en ce**
**que** les ouvertures de paroi (4) présentent à l'inverse de la chute de pression à attendre du second éduit traversant les canaux d'écoulement du deuxième module de canal d'écoulement (2), une taille croissant respectivement le long de la longueur du canal d'écoulement.

11. Réacteur à microstructure selon l'une quelconque des revendications 1 à 10,
**caractérisé en ce**
**que** les canaux d'écoulement du premier module de canal d'écoulement (1) s'étendent parallèlement ou perpendiculairement aux canaux d'écoulement du deuxième module de canal d'écoulement (2).

12. Procédé pour la réalisation de réactions chimiques entre un premier éduit et un second éduit dans un réacteur à microstructure selon l'une quelconque des revendications 1 à 11, le premier éduit étant injecté au niveau d'une extrémité du réacteur à microstructure dans les canaux d'écoulement et étant soutiré après le passage de la longueur entière des canaux d'écoulement respectifs du réacteur à microstructure et une fois la réaction effectuée au niveau de l'autre extrémité du réacteur à microstructure comme produit et le second éduit étant introduit sur le chemin entre le début et la fin du réacteur à microstructure dans les canaux d'écoulement individuels pour la formation d'un mélange réactif des deux éduits,
**caractérisé en ce**
**que** le second éduit est concentré dans une quantité contrôlée pour la commande de la courbe de température et de concentration dans les canaux d'écoulement respectivement à une pluralité d'endroits qui sont répartis le long de la longueur de chacun des canaux d'écoulement du réacteur à microstructure.
